# EUROPEAN PATENT SPECIFICATION

(11) **EP 3 766 151 B1**
(45) Date of publication and mention of the grant of the patent: **09.10.2024**
(21) Application number: 19716570.7
(22) Date of filing: 13.03.2019
(51) Int. Cl.: H02B 1/30

(54) **CABINET FOR ELECTRICAL APPARATUSES**
SCHALTSCHRANK
ARMOIRE ÉLECTRIQUE

(30) Priority: 13.03.2018 IT 201800003516
(43) Date of publication of application: 20.01.2021
(73) Proprietor: Bticino S.p.A., 21100 Varese (IT)
(72) Inventor: BUONOCUNTO, Nicola, 21100 Varese (IT); OGNIBENE, Giovanni, 21100 Varese (IT); MARAMOTTI, Davide, 21100 Varese (IT)
(74) Representative: Grana, Daniele
(86) International application number: PCT/IB2019/052029
(87) International publication number: WO 2019/175791

(56) References cited:
- JP-A- 2006 278 444
- US-A1- 2008 123 284
- US-A1- 2008 123 284
- US-A1- 2012 307 456
- US-A1- 2016 224 058
- US-B1- 6 445 585
- US-B1- 6 445 585

## Description

### Technical Field

The present invention relates to a cabinet for electrical apparatuses.

### Background Art

Various cabinets for electrical apparatuses widely used in several public and technical-industrial sectors are known and manufactured in different shapes and sizes depending on the electrical apparatuses they have to contain.

Cabinets of known type generally comprise a substantially closed supporting frame inside which one or more electrical apparatuses are arranged, like for instance an UPS used with the aim of keeping one or more electronic devices electrically powered at all times even in the event of a power failure.

Specifically, the use of UPSs is particularly important where there are electrical apparatuses the sudden turning off of which would cause serious consequences, e.g. in operating theatres or in data centers.

The UPSs contained inside cabinets of this type generally comprise one or more power supply units necessary to power one or more electronic devices. Cabinets of this type also comprise an access door which is hinged to the supporting frame so that they can be opened and closed, so as to make it easier to install the power supply units inside the supporting frame itself.

In particular, the power supply units generally comprise at least one control unit, at least one electric charge accumulator and at least one power electronics unit connected to each other.

In addition, each of these components must be correctly installed and configured to ensure the correct power supply of one or more electronic devices in the event of a power failure.

In this regard, the cabinets of known type are provided with a monitoring and configuration front display which is operatively connected to the power supply units located inside the supporting frame.

This way, a skilled operator is able to monitor and configure the power supply units contained inside the supporting frame by means of the front display without having to open the access door.

The cabinets of this type do however have some drawbacks related to the installation, replacement and maintenance operations to be carried out of the power supply units contained inside the supporting frame.

In fact, these operations can involve a plurality of connection or configuration activities of the power supply units inside the cabinet compartment, which must necessarily be alternated with frequent operations of verification and configuration of the UPS carried out, on the other hand, by means of the front display on the access door.

In particular, it is easy to appreciate how these installation operations of the power supply units inside the cabinet compartment are carried out by an operator while keeping open the access door to the compartment itself.

The operations of verification and configuration have however to be carried out by the operator by means of the front display, which is inaccessible to the operator him/herself during the activities inside the compartment.

For this reason, the activities carried out inside the UPS compartment are in many cases not easy and require long operating times by the operator who is forced to open and close the access door repeatedly.

The aforementioned information is to be deemed valid also for the maintenance operations that must be carried out periodically on the uninterruptible power systems to ensure the correct operation thereof, or also for the repair or replacement operations of one or more power supply units.

Other cabinets for electrical apparatuses are known from US 2008/123284 A1 and US 6 445 585 B 1.

### Description of the Invention

The main aim of the present invention is to devise a cabinet for electrical apparatuses which allows making easy and fast the operations of installation, configuration and maintenance/repair of the power supply units.

Another object of the present invention is to devise a cabinet for electrical apparatuses that allows overcoming the mentioned drawbacks of the prior art in a simple, rational, easy, effective to use and cost effective solution.

The aforementioned objects are achieved by the present cabinet for electrical apparatuses having the characteristics of claim 1.

### Brief Description of the Drawings

Other characteristics and advantages of the present invention will be more evident from the description of a preferred, but not exclusive, embodiment of a cabinet for electrical apparatuses, illustrated by way of an indicative, but nonlimiting example, in the attached tables of drawings in which:
Figure 1 is an axonometric view of the cabinet according to the invention;

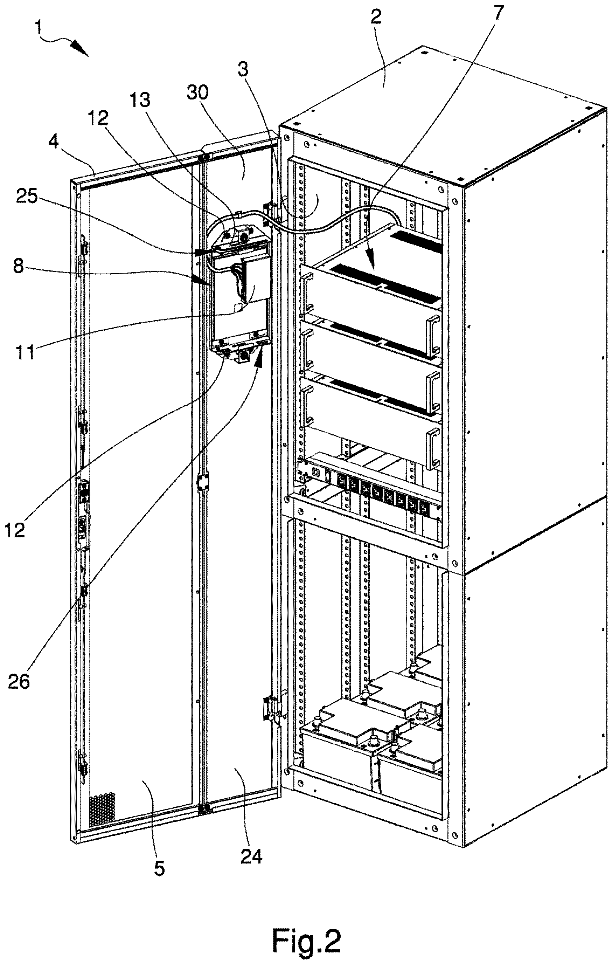

Figure 2 is an axonometric view of the cabinet according to the invention with the door open;

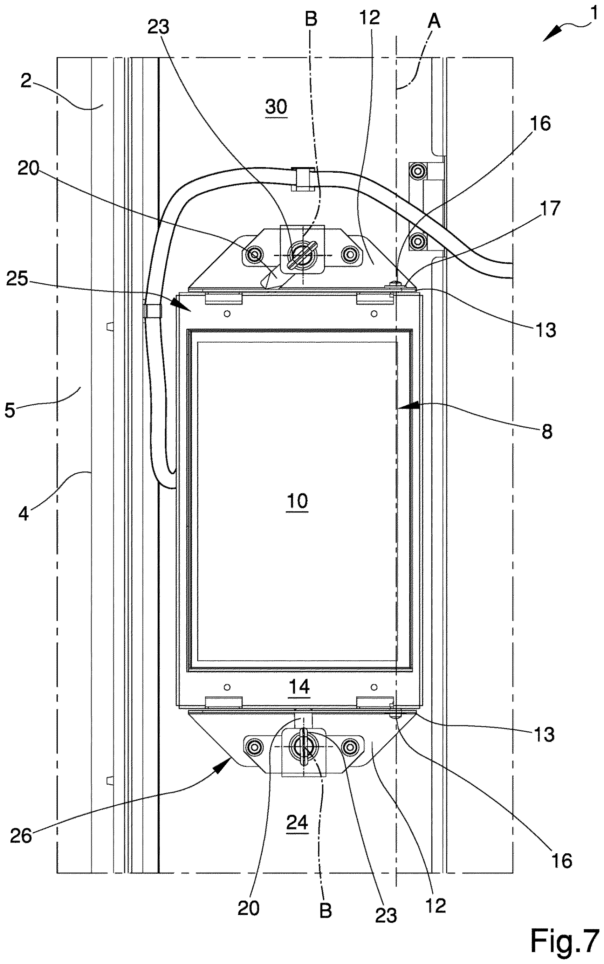

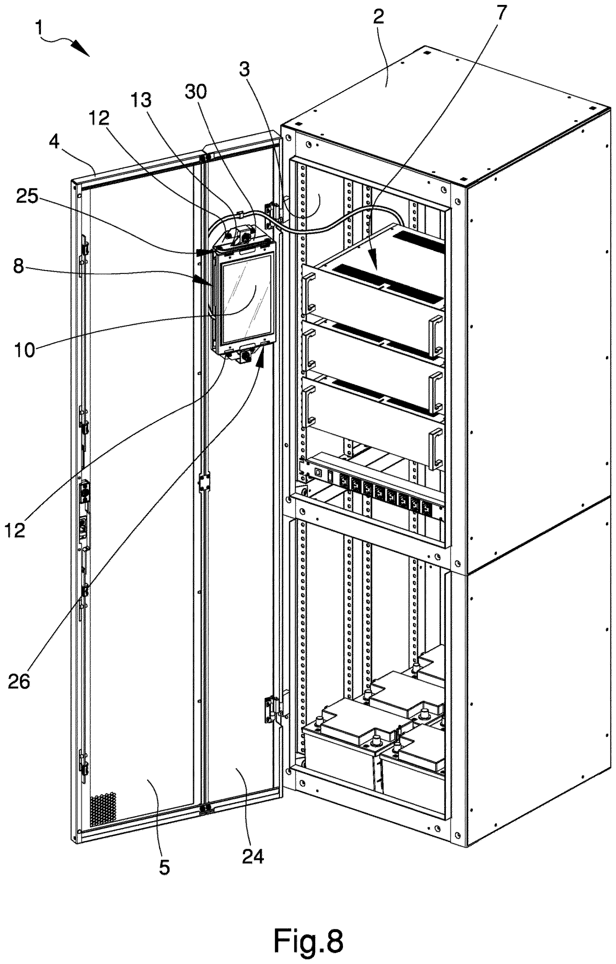

Figures 3 to 7 show, in a sequence of axonometric views, the switch from a first work configuration to a second work configuration of the cabinet display according to the invention.

### Embodiments of the Invention

With particular reference to these figures, reference numeral 1 globally indicates a cabinet for electrical apparatuses.

The cabinet 1 for electrical apparatuses comprises:
- at least one supporting frame 2 defining at least one compartment 3 for containing at least one electrical apparatus 7 and comprising at least one door 4 for opening/closing the compartment 3, the door 4 being provided with at least one outer face 6 and with at least one inner face 5 substantially opposed to the outer face 6 and substantially inaccessible when the door 4 closes the compartment 3;
- at least one monitoring and configuration display 8 which can be connected to the electrical apparatus 7 so as to allow the configuration thereof and to monitor its activity.

In the following discussion, the term "electrical" is also used to refer to electronic components or electrical components made at least in part from electronic elements.

The supporting frame 2 is preferably of the type of a cabinet positioned resting on the ground and openable and closable manually by an operator by means of the door 4.

In addition, the words "outer" and "inner" used with reference to the faces 5, 6 of the door 4 are intended to indicate the face of the door 4 which is accessible to the operator when the door 4 closes the compartment 3, and the face of the door 4 which is substantially facing the compartment 3 and which is inaccessible to the operator when the door 4 closes the compartment 3, respectively.

The display 8 preferably has a substantially flat shape and comprises a screen 10 of the touch-screen type and a connecting panel 11 substantially opposed to the screen 10 and adapted to operatively connect the display 8 to the electrical apparatus 7.

According to the embodiment shown in the illustrations, the electrical apparatus 7 is an uninterruptible power system for the supply of at least one electronic device comprising at least one power supply unit provided with:
- at least one control unit operatively connected to the display 8;
- at least one electric charge accumulator operatively connected to the control unit;
- at least one power electronics assembly operatively connected to the control unit.

Alternative embodiments of the cabinet 1 cannot however be ruled out, e.g. wherein the cabinet 1 contains at least one electrical apparatus 7 of the generic type housed inside the compartment 3 and connected to the display 8 so as to monitor the operation thereof.

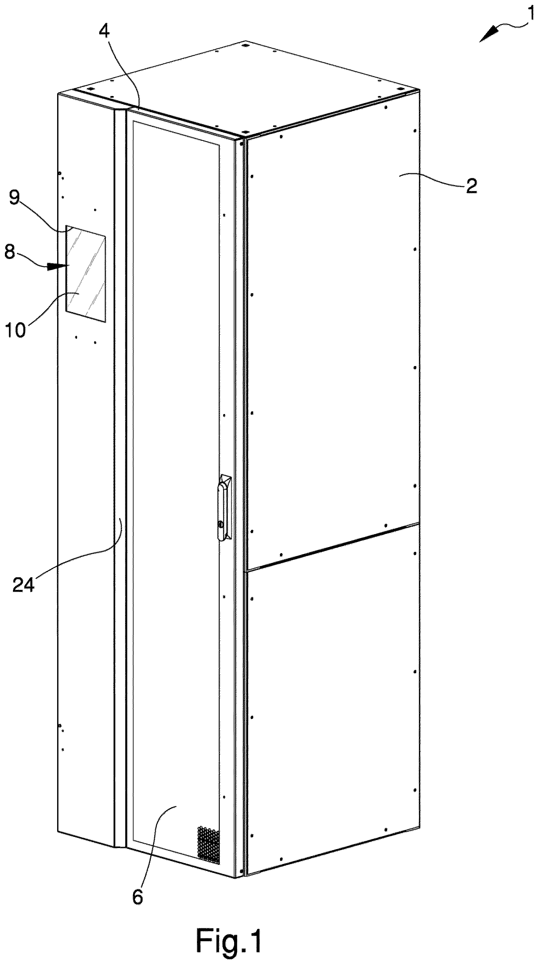

The cabinet 1 comprises at least one access opening 9 to the display 8 made on the door 4, the access opening 9 being completely closed by the display 8 in the first work configuration, as shown in Figure 1.

In particular, the access opening 9 is made with a shape substantially complementary with respect to that of the display 8 so as to make the screen 10 fully accessible through the access opening 9.

In this case, the display 8 and the access opening 9 are substantially rectangular in shape.

Alternative embodiments of the cabinet 1 cannot however be ruled out, wherein the display 8 and the access opening 9 are made of different shapes, such as e.g. square shapes.

The cabinet 1 comprises orientation means 25, 26 for orienting the display 8 between a first work configuration, in which the display 8 is facing from the outer face 6 and is accessible when the door 4 is closed, and at least a second work configuration, in which the display 8 is arranged facing from the inner face 5 and is accessible when the door 4 is open.

The orientation means 25, 26 are preferably associated with the inner face 5 of the door 4.

In addition, the orientation means 25, 26 comprise rotation means for rotating the display 8 around at least one axis of rotation A between the first work configuration and the second work configuration.

Advantageously, the axis of rotation A is arranged substantially vertical to the ground.

Alternative embodiments of the rotation means 25, 26 cannot however be ruled out wherein the axis of rotation A is arranged, e.g., horizontally or transversely with respect to the ground.

The rotation means 25, 26 comprise supporting means 26 associated with the door 4 and at least one moveable assembly 25 associated rotating around the axis of rotation A with the supporting means 26, the display 8 being locked together in rotation to the moveable assembly 25.

The supporting means 26 comprise at least one pair of fixed bodies 12 substantially opposed to each other, the moveable assembly 25 being interposed between the pair of fixed bodies 12.

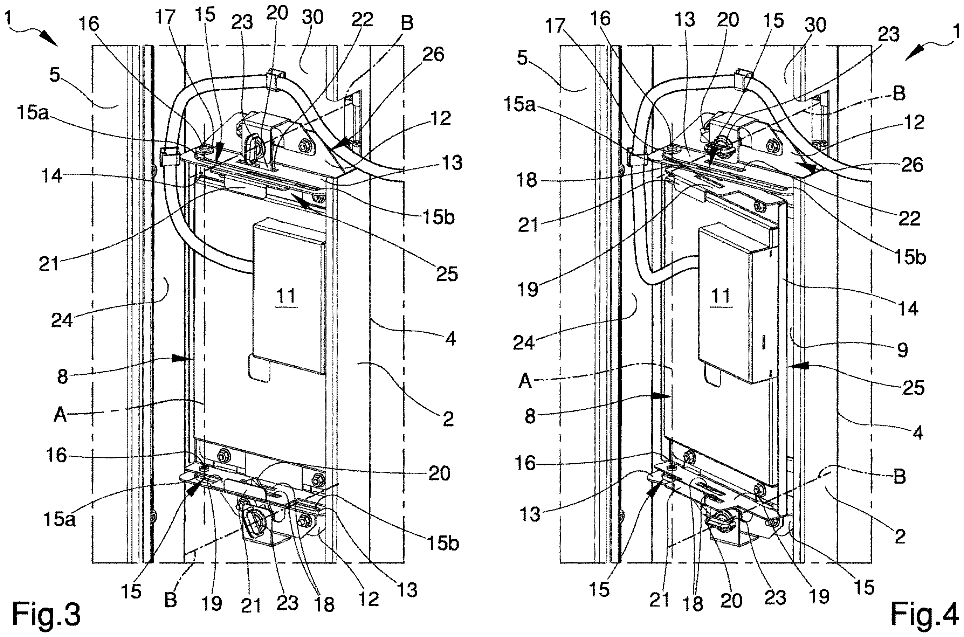

Appropriately, the fixed bodies 12 are brackets fixed to the inner face 5 one below the other in the proximity of an upper end and a lower end of the access opening 9 respectively, as shown in Figures 3 to 6.

In the following discussion, the words "upper" and "lower", as well as the words "above" and "below", used with reference to the components of the cabinet 1 are meant to indicate the level with respect to the ground at which these components are arranged one with respect to the other.

According to the embodiment shown in the figures, the fixed bodies 12 comprise one holding element 13 of substantially flat shape, arranged substantially horizontal to the ground and protruding from the door 4.

In addition, the holding elements 13 of the two fixed bodies 12 are arranged substantially parallel and opposed to each other.

The moveable assembly 25 comprises a supporting framework 14 inside which the display 8 is fixed.

In detail, according to the embodiment shown in the illustrations, the supporting framework 14 is substantially rectangular in shape and comprises a pair of first straight sides arranged opposite and parallel to each other and a pair of second straight sides arranged opposite and parallel to each other and substantially contiguous and orthogonal to the pair of first straight sides, so as to define the shape of the supporting framework 14.

Alternative embodiments of the supporting framework 14 cannot however be ruled out, e.g. wherein the supporting framework 14 is square or circular in shape.

The first straight sides are preferably arranged substantially horizontal to the ground and the second straight sides are arranged substantially vertical to the ground to form a supporting framework 14 arranged substantially parallel to the inner face 5 when the display 8 is in the first or in the second work configuration.

The orientation means 25, 26 comprise translation means for translating the axis of rotation A between at least a first extreme position, in which the display 8 is in the first work configuration, and at least a second extreme position, in which the display 8 is in the second work configuration.

In addition, the translation means comprise at least one guide 15 made on each of the fixed bodies 12 and at least one pair of sliding elements 16, 17 associated in a sliding manner with a corresponding guide 15 and made on the moveable assembly 25, the sliding elements 16, 17 rotating around the axis of rotation A and sliding along the guides 15 between the first extreme position and the second extreme position.

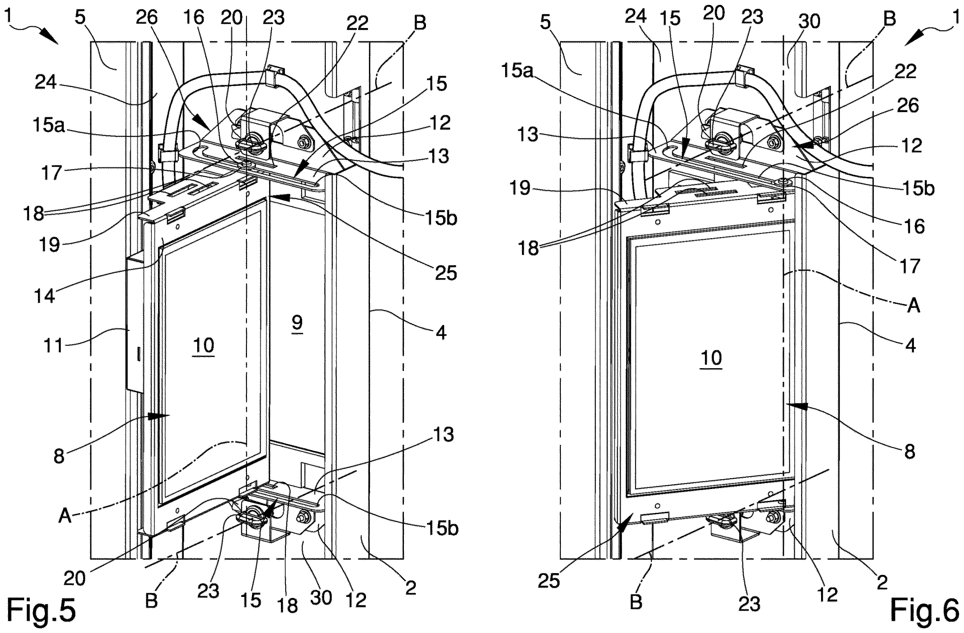

Advantageously, the guides 15 are made substantially parallel to each other on a corresponding holding element 13, as shown in Figure 5.

The sliding elements 16, 17, on the other hand, are made at an upper portion and a lower portion respectively of the supporting framework 14 and are substantially opposed to each other.

In particular, the sliding elements 16, 17 are associated with the supporting framework 14 as an extension of one of the second straight sides at the points of junction of the latter with the first straight sides, respectively.

In addition, each of the sliding elements 16, 17 is coupled to a corresponding guide 15 so as to fix the moveable assembly 25 placed between the fixed bodies 12 and so as to maintain the display 8 substantially vertical.

In particular, the sliding elements 16, 17 comprise at least one rotation pin 16, e.g. a screw, inserted inside the guide 15 and at least one disc-shaped ring 17, e.g. a washer, centered along the rotation pin 16 and placed in abutment between an extreme portion of the rotation pin 16, in this case the head of the screw, and the edge of the holding element 13 defining the guide 15, as shown in Figures 3 to 6.

In addition, the rotation pins 16 and the corresponding disc-shaped rings 17 are associated idle with each other and centered with respect to the axis of rotation A.

According to the embodiment shown in the figures, the disc-shaped ring 17 has an internal diameter of width comparable to that of the rotation pin and an external diameter of width substantially greater than the width of the extreme portion of the rotation pin 16 and the width of the guide 15, so as to maintain the coupling between the sliding elements 16, 17 and the corresponding guides 15.

The guide 15 comprises at least a first movement section 15a of the sliding elements 16, 17 moving close to/away from the door 4 and at least a second movement section 15b arranged substantially orthogonal to the first movement section 15a and substantially parallel to the door 4.

According to the embodiment shown in the figures, the first movement section 15a is substantially orthogonal to the door 4.

In addition, the first movement section 15a is substantially shorter than the second movement section 15b and creates with the latter a guide 15 that is substantially horizontal to the ground.

In particular, the first movement section 15a and the second movement section 15b are substantially straight and have substantially the same and constant width in order to define a guide 15 with a substantially "L" shape.

The first extreme position and the second extreme position of the axis of rotation A correspond to the extreme of the guide 15 defined by the first movement section 15a and to the extreme of the guide 15 defined by the second movement section 15b, respectively.

In addition, the distance between the inner face 5 and the extreme defined by the first movement section 15a is substantially smaller than that between the inner face 5 and the extreme defined by the second movement section 15b.

Consequently, when the display 8 is in the first work configuration it is placed at a shorter distance from the door 4 than when it is placed in the second work configuration.

In this work configuration, the supporting framework 14 adheres to the inner face 5 of the door 4 and the display 8 is arranged at the access opening 9, through which the operator can use the display 8.

The cabinet 1 comprises blocking means 29 for blocking the display 8 in at least one of the first work configuration and the second work configuration.

In addition, the blocking means 29 comprise at least one blocking element 20 associated with at least one of the door 4 and the supporting means 26, the blocking element 20 being moveable between a resting configuration, in which it is moved away from the moveable assembly 25, and at least one fastening configuration, in which it is engaged on the moveable assembly 25 by fastening the position thereof.

In addition, the blocking means 29 comprise a pair of holes 18 made on the moveable assembly 25.

Advantageously, the blocking element 20 is arranged inside one of the holes 18 in the fastening configuration and is arranged outside the holes 18 in the resting configuration, the display 8 being fastened in one of the first work configuration and the second work configuration when the blocking element 20 is in the fastening configuration, and being movable between the first work configuration and the second work configuration when the blocking element 20 is in the resting configuration.

According to the embodiment shown in the illustrations, the moveable assembly 25 comprises at least one protrusion 19 having a substantially flat shape and associated substantially horizontal with respect to the ground at one of the first straight sides of the supporting framework 14.

In addition, the holes 18 are made on the protrusion 19 and are substantially arranged parallel to each other.

Advantageously, the holes 18 have a substantially elongated shape and are arranged at a predefined distance the one from the other so as to allow the movement of the blocking element 20 in the fastening configuration both when the display 8 is in the first work configuration and in the second work configuration.

In particular, in the first work configuration, a hole 18 is arranged at the blocking means 29, in this case below the blocking element 20, while in the second work configuration the other hole 18 is arranged at the blocking means 29.

In fact, the position of the moveable assembly 25 with respect to the blocking means 29 varies depending on whether the display 8 is arranged in the first work configuration or in the second work configuration.

Moreover, according to the embodiment shown in the illustrations, the moveable assembly 25 comprises at least one gripping portion 21 associated with the protrusion 19 and arranged substantially orthogonal to the latter, in the present case substantially parallel to the display 8.

The gripping portion 21 is preferably a vertical tab adapted to facilitate the movement of the display 8 between the first work configuration and the second work configuration by the operator.

Advantageously, the blocking means 29 comprise at least one recess 22 made on the supporting means 26 and adapted to receive the blocking element 20, the recess 22 being facing and communicating with one of the holes 18 when the display 8 is in the first work configuration and being facing and communicating with the other of the holes 18 when the display 8 is in the second work configuration, the recess 22 accommodating the blocking element 20 in the fastening configuration.

According to the embodiment shown in the illustrations, the blocking means 29 are preferably associated with the supporting means 26 and are of the type of a manually operated lock.

In particular, the blocking means 29 comprise at least one actuation block 23 associated with the blocking element 20 and which can be operated to move the latter between the fastening configuration and the resting configuration.

Preferably, the actuation block 23 is a manual switch pivoted to the supporting means 26 and rotating around a central axis B substantially perpendicular to the inner face 5.

The blocking element 20, on the other hand, is of the type of a bolt which is arranged substantially parallel to the inner face 5 and rotating around the central axis B because of the rotation of the actuation block 23.

Alternative embodiments of the blocking means 29 cannot however be ruled out, e.g. wherein the actuation block 23 is of the automatic or semi-automatic type, or e.g. wherein the blocking element 20 is moved by the actuation block 23 with straight motion moving close to/away from the recess 22.

In particular, the blocking means 29 comprise:
- two blocking elements 20 arranged in the proximity of the fixed bodies 12 respectively;
- two pairs of holes 18 made on the moveable assembly 25 in the proximity of the blocking elements 20 respectively; and
- two recesses 22 made on the supporting means 26 in the proximity of the blocking elements 20 respectively.

Advantageously, the moveable assembly 25 comprises two protrusions 19 arranged substantially opposed and parallel to each other, each provided with a pair of holes 18, as shown in Figure 5.

In addition, a first blocking element 20 is arranged above the upper protrusion 19 and a second blocking element 20 is arranged below the lower protrusion 19, as shown in Figure 3.

This way, the display 8 is fixed between the first work configuration and the second work configuration both above and below.

Alternative embodiments of the cabinet 1 cannot however be ruled out, e.g. wherein the blocking means 29 are made laterally to the orientation means 25, 26, or wherein the fastening of the display 8 between the first work configuration and the second work configuration is carried out laterally.

Advantageously, the door 4 comprises a shaped portion 24 defining at least one cavity 30 for containing the display 8, the cavity 30 containing the orientation means 25, 26.

Preferably, the shaped portion 24 is substantially a longitudinal portion which extends from top to bottom for the entire extension of the door 4 and having a cross-section substantially in the shape of a "C" to define the shape of the cavity 30.

Alternative embodiments of the door 4 cannot however be ruled out, e.g. wherein the shaped portion 24 extends by a limited portion of the door 4 and/or e.g. wherein the shaped portion 24 defines a cavity 30 of a different shape. According to the embodiment shown in the illustrations, the cavity 30 defines a protrusion on the outer face 6 and a recess on the inner face 5 visible when the door 4 is open.

In addition, the cavity 30 defines a containment volume of comparable value with the volume occupied by the orientation means 25, 26.

In particular, the orientation means 25, 26 are associated with the inner face 5 of the door 4 at the shaped portion 24, and the access opening 9 is made on the outer face 6 of the door 4 at the shaped portion 24.

The operation of the present invention is as follows.

Once the door 4 has been opened, the operator proceeds with the installation of one or more electrical apparatuses 7.

In the following discussion, the electrical apparatuses 7 will be indicated by way of example as uninterruptible power supplies, but alternative embodiments cannot be ruled out wherein the electrical apparatuses 7 are of another type.

In particular, the operator connects the power supply units to the connecting panel 11 of the display 8, which is arranged in the first work configuration. After connecting the power supply units, the operator rotates the actuation block 23 of the blocking means 29 so as to move the blocking elements 20 from the fastening configuration to the resting configuration.

Once this configuration has been reached, the operator grabs the gripping portion 21 and drags it away from the door 4.

This way, the sliding elements 16, 17, initially placed at the first extreme position, slide along the corresponding guides 15 until they reach the point where the first movement sections meet the second movement sections 15a, 15b.

Once this configuration has been reached, the operator rotates the moveable assembly 25 around the axis of rotation A by 180° and at the same time he/she moves the sliding elements 16, 17 along the second movement section 15b until reaching the second extreme position.

This way, when passing from the first extreme point to the second extreme point, the touch screen 10 performs a rotary translation and is arranged facing from the inner face 5 of the door 4.

The operator then fixes the position of the moveable assembly 25 by actuating the blocking means 29.

In particular, the operator rotates the actuation block 23 of the blocking means 29 in order to move the blocking elements 20 from the resting configuration to the fastening configuration.

Advantageously, in the second work configuration, the moveable assembly 25 is spaced away from the inner face 5 of the door 4 by a distance substantially equal to the length of the first movement section 15a of the guide 15.

In addition, in this configuration, the screen 10 is accessible to the operator, who is able to operate with the power supply units located inside the compartment 3 and at the same time to use the display 8.

Once the power supply units have been installed, the operator brings the display 8 to the first work configuration and can close the door 4.

In particular, the operations necessary to bring the display 8 to the first work configuration are similar to those just described with reference to the operations necessary to bring the display 8 to the second work configuration, unlike the fact that the moveable assembly 25 must be moved along the second movement section 15b of the guide 15 and then be rotated and moved along the first movement section 15a as far as bringing the screen 10 to the access opening 9.

It has in practice been found that the described invention achieves the intended objects.

In particular, it is underlined that the use of the orientation means allows the operator to orient the display facing inwards or outwards of the supporting frame according to needs.

In addition, the blocking means allow fastening the position of the display between the first work configuration and the second work configuration in a stable position.

In addition, the presence of the shaped portion allows maintaining the orientation means inside the cavity, thus reducing the risk of accidental collisions, e.g. with the operator.

## Claims

1. Cabinet (1) for electrical apparatuses, comprising:
- at least one supporting frame (2) defining at least one compartment (3) for containing at least one electrical apparatus (7) and comprising at least one door (4) for opening / closing said compartment (3), said door (4) being provided with at least one outer face (6) and with at least one inner face (5) substantially opposed to said outer face (6) and substantially inaccessible when said door (4) closes said compartment (3);
- at least one monitoring and configuration display (8), mounted on said door (4) and which can be operatively connected to said electrical apparatus (7) so as to allow the configuration thereof and to monitor its activity;
- orientation means (25, 26) for orienting said display (8) between a first work configuration, in which said display (8) is facing from said outer face (6) and is accessible when said door (4) is closed, and at least a second work configuration, in which said display (8) is arranged facing from said inner face (5) and is accessible when said door (4) is open;
wherein:
- said orientation means (25, 26) comprise rotation means for rotating said display (8) around at least one axis of rotation (A) between said first work configuration and said second work configuration;
- said rotation means (25, 26) comprise supporting means (26) associated with said door (4) and at least one moveable assembly (25) associated rotating around said axis of rotation (A) to said supporting means (26), said display (8) being locked together in rotation to said moveable assembly (25);
- said moveable assembly (25) comprises a supporting framework (14) inside which said display (8) is fixed;
- said supporting means (26) comprise at least one pair of fixed bodies (12) substantially opposed to each other, said moveable assembly (25) being interposed between said pair of fixed bodies (12);
- said orientation means (25, 26) comprise translation means for translating
said axis of rotation (A) between at least a first extreme position, in which said
display (8) is in said first work configuration, and at least a second extreme position,
in which said display (8) is in said second work configuration;
- said translation means comprise at least one guide (15) made on each of said fixed bodies (12) and at least one pair of sliding elements (16, 17) associated in a sliding manner with a corresponding guide (15) and made on said moveable assembly (25), said sliding elements (16, 17) rotating around said axis of rotation (A) and sliding along said guides (15) between said first extreme position and said second extreme position;
wherein:
- the cabinet comprises one access opening (9) to said display (8) made on said door (4);
- when said display (8) is in said first work configuration it is placed at a shorter distance from said door (4) than when it is placed in said second work configuration;
- in said first work configuration, said support framework (14) adheres to said inner face (5) of the door (4) and said display (8) is arranged at said access opening (9), through which the operator can use said display (8);
- the cabinet comprises blocking means (9) for blocking said display (8) in the at least said first work configuration;
**characterized by** the fact that:
- said guide (15) comprises at least a first movement section (15a) of said sliding elements (16, 17) moving close to / away from said door (4) and at least a second movement section (15b) arranged substantially orthogonal to said first movement section (15a) and substantially parallel to said door (4);
- said access opening (9) is completely closed by said display (8) in said first work configuration;
- said first movement section (15a) is substantially orthogonal to said door (4);
- said first extreme position and said second extreme position of said axis of rotation (A) correspond to the extreme of said guide (15) defined by said first movement section (15a) and to the extreme of said guide (15) defined by said second movement section (15b), respectively;
- the distance between said inner face (5) and said extreme defined by said first movement section (15a) is substantially smaller than that between said inner face (5) and said extreme defined by said second movement section (15b).

2. Cabinet (1) according to claim 1, wherein said blocking means (29) block said display (8) in at least said second work configuration.

3. Cabinet (1) according to one or more of the preceding claims, wherein said blocking means (29) comprise at least one blocking element (20) associated with at least one of said door (4) and said supporting means (26), said blocking element (20) being movable between a resting configuration, in which it is moved away from said moveable assembly (25), and at least one fastening configuration, in which it is engaged on said moveable assembly (25) by fastening the position thereof.

4. Cabinet (1) according to one or more of the preceding claims, wherein said blocking means (29) comprise a pair of holes (18) made on said moveable assembly (25) and wherein said blocking element (20) is arranged inside one of said holes (18) in said fastening configuration and is arranged outside said holes (18) in said resting configuration, said display (8) being fastened in one of said first work configuration and said second work configuration when said blocking element (20) is in said fastening configuration, and being movable between said first work configuration and said second work configuration when said blocking element (20) is in said resting configuration.

5. Cabinet (1) according to claim 4, wherein said blocking means (29) comprise at least one recess (22) made on said supporting means (26) and adapted to receive said blocking element (20), said recess (22) being facing and communicating with one of said holes (18) when said display (8) is in said first work configuration and being facing and communicating with the other of said holes (18) when said display (8) is in said second work configuration, said recess (22) accommodating said blocking element (20) in said fastening configuration.

6. Cabinet (1) according to claim 5, wherein said blocking means (29) comprise:
- two of said blocking elements (20) arranged in the proximity of said fixed bodies (12) respectively;
- two pairs of said holes (18) made on said moveable assembly (25) in the proximity of said blocking elements (20) respectively; and
- two of said recesses (22) made on said supporting means (26) in the proximity of said blocking elements (20) respectively.

7. Cabinet (1) according to one or more of the preceding claims, wherein said door (4) comprises at least one shaped portion (24) defining at least one cavity (30) for containing said display (8), said cavity (30) containing said orientation means (25, 26).

8. Electrical equipment, comprising:
- at least one cabinet (1) according to any of claims 1 to 7;
- at least one electrical apparatus (7) accommodated inside said compartment (3) and operatively connected to said display (8).

9. UPS, comprising:
- at least one cabinet (1) according to any of claims 1 to 7;
- at least one power supply unit for supplying at least one electronic device, said power supply unit being arranged inside said compartment (3) and being provided with:
- at least one control unit operatively connected to said display (8);
- at least one electric charge accumulator;
- at least one power electronics assembly.

## Patentansprüche

1. Schaltschrank (1) für elektrische Geräte, umfassend:
- mindestens einen Tragrahmen (2), der mindestens ein Fach (3) zur Aufnahme mindestens eines elektrischen Geräts (7) definiert und mindestens eine Tür (4) zum Öffnen / Schließen des Fachs (3) umfasst, wobei die Tür (4) mit mindestens einer Außenfläche (6) und mit mindestens einer Innenfläche (5) versehen ist, die der Außenfläche (6) im Wesentlichen gegenüberliegt und im Wesentlichen unzugänglich ist, wenn die Tür (4) das Fach (3) verschließt;
- mindestens eine Überwachungs- und Konfigurationsanzeige (8), die an der Tür (4) angebracht ist und die operativ mit dem elektrischen Gerät (7) verbunden werden kann, um dessen Konfiguration zu ermöglichen und seine Aktivität zu überwachen;
- Ausrichtungsmittel (25, 26) zum Ausrichten der Anzeige (8) zwischen einer ersten Arbeitsstellung, in der die Anzeige (8) von der Außenfläche (6) weggerichtet ist und zugänglich ist, wenn die Tür (4) geschlossen ist, und mindestens einer zweiten Arbeitsstellung, in der die Anzeige (8) von der Innenfläche (5) weggerichtet ist und zugänglich ist, wenn die Tür (4) geöffnet ist;
wobei:
- die Ausrichtungsmittel (25, 26) Drehmittel zum Drehen der Anzeige (8) um mindestens eine Drehachse (A) zwischen der ersten Arbeitsstellung und der zweiten Arbeitsstellung umfassen;
- die Drehmittel (25, 26) Stützmittel (26), die mit der Tür (4) verbunden sind, und mindestens eine bewegliche Baugruppe (25) umfassen, die um die Drehachse (A) drehend mit den Stützmitteln (26) verbunden ist, wobei die Anzeige (8) bei der Drehung mit der beweglichen Baugruppe (25) verriegelt ist;
- die bewegliche Baugruppe (25) eine Tragrahmenanordnung (14) umfasst, in der die Anzeige (8) befestigt ist;
- die Stützmittel (26) mindestens ein Paar von festen Körpern (12) umfassen, die einander im Wesentlichen gegenüberliegen, wobei die bewegliche Anordnung (25) zwischen dem Paar von festen Körpern (12) angeordnet ist;
- die Ausrichtungsmittel (25, 26) Translationsmittel umfassen, um die Drehachse (A) zwischen mindestens einer ersten Endposition, in der sich die Anzeige (8) in der ersten Arbeitsstellung befindet, und mindestens einer zweiten Endposition, in der sich die Anzeige (8) in der zweiten Arbeitsstellung befindet, zu verschieben;
- die Translationsmittel mindestens eine Führung (15), die an jedem der festen Körper (12) ausgebildet ist, und mindestens ein Paar Gleitelemente (16, 17) umfassen, die gleitend mit einer entsprechenden Führung (15) verbunden sind und an der beweglichen Baugruppe (25) ausgebildet sind, wobei sich die Gleitelemente (16, 17) um die Drehachse (A) drehen und entlang der Führungen (15) zwischen der ersten Endposition und der zweiten Endposition gleiten;
wobei:
- der Schrank eine Zugangsöffnung (9) zu der Anzeige (8) aufweist, die in der Tür (4) ausgebildet ist;
- wenn sich die Anzeige (8) in der ersten Arbeitsstellung befindet, ist sie in einem kürzeren Abstand von der Tür (4) angeordnet als wenn sie in der zweiten Arbeitsstellung angeordnet ist;
- in der ersten Arbeitsstellung liegt die Tragrahmenanordnung (14) an der Innenfläche (5) der Tür (4) an, und die Anzeige (8) ist an der Zugangsöffnung (9) angeordnet, durch die der Bediener die Anzeige (8) benutzen kann;
- der Schrank Blockiermittel (9) zum Blockieren der Anzeige (8) in der zumindest ersten Arbeitsstellung umfasst;
**dadurch gekennzeichnet, dass**
- die Führung (15) mindestens einen ersten Bewegungsabschnitt (15a) der Gleitelemente (16, 17), die sich auf die Türe (4) zu bzw. von dieser weg bewegen, und mindestens einen zweiten Bewegungsabschnitt (15b) umfasst, der im Wesentlichen orthogonal zu dem ersten Bewegungsabschnitt (15a) und im Wesentlichen parallel zu der Tür (4) angeordnet ist;
- die Zugangsöffnung (9) vollständig durch die Anzeige (8) in der ersten Arbeitsstellung verschlossen ist;
- der erste Bewegungsabschnitt (15a) im Wesentlichen orthogonal zu der Tür (4) ist;
- die erste Endposition und die zweite Endposition der Drehachse (A) entsprechen dem durch den ersten Bewegungsabschnitt (15a) definierten Ende der Führung (15) bzw. dem durch den zweiten Bewegungsabschnitt (15b) definierten Ende der Führung (15);
- der Abstand zwischen der Innenfläche (5) und dem durch den ersten Bewegungsabschnitt (15a) definierten Ende wesentlich kleiner ist als der zwischen der Innenfläche (5) und dem durch den zweiten Bewegungsabschnitt (15b) definierten Ende.

2. Schrank (1) nach Anspruch 1, wobei die Blockiermittel (29) die Anzeige (8) zumindest in der zweiten Arbeitsstellung blockieren.

3. Schrank (1) nach einem oder mehreren der vorhergehenden Ansprüche, wobei die Blockiermittel (29) mindestens ein Blockierelement (20) umfassen, das mit der Türe (4) und/ oder den Stützmitteln (26) verbunden ist, wobei das Blockierelement (20) zwischen einer Ruhestellung, in der es von der beweglichen Baugruppe (25) entfernt ist, und mindestens einer Befestigungsstellung beweglich ist, in der es an der beweglichen Baugruppe (25) durch Festlegen der Position derselben in Eingriff ist.

4. Schrank (1) nach einem oder mehreren der vorhergehenden Ansprüche, wobei die Blockiermittel (29) ein Paar von Löchern (18) umfassen, die auf der beweglichen Baugruppe (25) angebracht sind, und wobei das Blockierelement (20) in der Befestigungsstellung innerhalb eines der Löcher (18) und in der Ruhestellung außerhalb der Löcher (18) angeordnet ist, wobei die Anzeige (8) in der ersten Arbeitsstellung oder der zweiten Arbeitsstellung befestigt ist, wenn sich das Blockierelement (20) in der Befestigungsstellung befindet, und zwischen der ersten Arbeitsstellung und der zweiten Arbeitsstellung beweglich ist, wenn sich das Blockierelement (20) in der Ruhestellung befindet.

5. Schrank (1) nach Anspruch 4, wobei die Blockiermittel (29) mindestens eine Aussparung (22) umfassen, die an den Stützmitteln (26) ausgebildet ist, um das Blockierelement (20) aufzunehmen, wobei die Aussparung (22) einem der Löcher (18) zugewandt ist und mit diesem in Verbindung steht, wenn sich die Anzeige (8) in der ersten Arbeitsstellung befindet, und dem anderen der Löcher (18) zugewandt ist und mit diesem in Verbindung steht, wenn sich die Anzeige (8) in der zweiten Arbeitsstellung befindet, wobei die Aussparung (22) das Blockierelement (20) in der Befestigungsstellung aufnimmt.

6. Schrank (1) nach Anspruch 5, wobei die Blockiermittel (29) Folgendes umfassen:
- zwei der Blockierungselemente (20), die jeweils in der Nähe der festen Körper (12) angeordnet sind;
- zwei Paare der Löcher (18), die an der beweglichen Baugruppe (25) jeweils in der Nähe der Blockierelemente (20) angebracht sind; und
- zwei der Aussparungen (22), die auf den Stützmitteln (26) jeweils in der Nähe der Blockierelemente (20) angebracht sind.

7. Schrank (1) nach einem oder mehreren der vorhergehenden Ansprüche, wobei die Tür (4) mindestens einen geformten Abschnitt (24) umfasst, der mindestens einen Hohlraum (30) zur Aufnahme der Anzeige (8) definiert, wobei der Hohlraum (30) die Ausrichtungsmittel (25, 26) enthält.

8. Elektrisches Gerät, umfassend:
- mindestens einen Schrank (1) nach einem der Ansprüche 1 bis 7;
- mindestens ein elektrisches Gerät (7), das in dem Fach (3) untergebracht und mit der Anzeige (8) verbunden ist.

9. USV, umfassend:
- mindestens einen Schrank (1) nach einem der Ansprüche 1 bis 7;
- mindestens eine Stromversorgungseinheit zur Versorgung mindestens eines elektronischen Geräts, wobei die Stromversorgungseinheit innerhalb des Fachs (3) angeordnet und versehen ist mit:
- mindestens einer Steuereinheit, die operativ mit der Anzeige (8) verbunden ist;
- mindestens einem elektrischen Ladungsspeicher;
- mindestens eine Leistungselektronik-Baugruppe.

## Revendications

1. - Armoire (1) pour appareils électriques, comprenant :
- au moins un cadre de support (2) définissant au moins un compartiment (3) pour contenir au moins un appareil électrique (7) et comprenant au moins une porte (4) pour ouvrir/fermer ledit compartiment (3), ladite porte (4) comportant au moins une face externe (6) et au moins une face interne (5) sensiblement opposée à ladite face externe (6) et sensiblement inaccessible lorsque ladite porte (4) ferme ledit compartiment (3) ;
- au moins un dispositif d'affichage de surveillance et de configuration (8), monté sur ladite porte (4) et qui peut être connecté de manière fonctionnelle audit appareil électrique (7) de manière à permettre sa configuration et à surveiller son activité ;
- des moyens d'orientation (25, 26) pour orienter ledit dispositif d'affichage (8) entre une première configuration de travail, dans laquelle ledit dispositif d'affichage (8) est en regard de ladite face externe (6) et est accessible lorsque ladite porte (4) est fermée, et au moins une seconde configuration de travail, dans laquelle ledit dispositif d'affichage (8) est disposé en regard de ladite face interne (5) et est accessible lorsque ladite porte (4) est ouverte ;
dans laquelle :
- lesdits moyens d'orientation (25, 26) comprennent des moyens de rotation pour faire tourner ledit dispositif d'affichage (8) autour d'au moins un axe de rotation (A) entre ladite première configuration de travail et ladite seconde configuration de travail ;
- lesdits moyens de rotation (25, 26) comprennent des moyens de support (26) associés à ladite porte (4) et au moins un ensemble mobile (25) associé tournant autour dudit axe de rotation (A) auxdits moyens de support (26), ledit dispositif d'affichage (8) étant verrouillé en rotation avec ledit ensemble mobile (25) ;
- ledit ensemble mobile (25) comprend un cadre de support (14) à l'intérieur duquel ledit dispositif d'affichage (8) est fixé ;
- lesdits moyens de support (26) comprennent au moins une paire de corps fixes (12) sensiblement opposés l'un à l'autre, ledit ensemble mobile (25) étant interposé entre les deux corps fixes (12) de la paire ;
- lesdits moyens d'orientation (25, 26) comprennent des moyens de translation pour déplacer en translation ledit axe de rotation (A) entre au moins une première position extrême, dans laquelle ledit dispositif d'affichage (8) est dans ladite première configuration de travail, et au moins une seconde position extrême, dans laquelle ledit dispositif d'affichage (8) est dans ladite seconde configuration de travail ;
- lesdits moyens de translation comprennent au moins un guide (15) réalisé sur chacun desdits corps fixes (12) et au moins une paire d'éléments coulissants (16, 17) associés de manière coulissante avec un guide correspondant (15) et réalisé sur ledit ensemble mobile (25), lesdits éléments coulissants (16, 17) tournant autour dudit axe de rotation (A) et coulissant le long desdits guides (15) entre ladite première position extrême et ladite seconde position extrême ;
dans laquelle :
- l'armoire comprend une ouverture d'accès (9) audit dispositif d'affichage (8) réalisée sur ladite porte (4) ;
- quand ledit dispositif d'affichage (8) est dans ladite première configuration de travail, il est placé à une distance plus courte de ladite porte (4) que quand il est placé dans ladite seconde configuration de travail ;
- dans ladite première configuration de travail, ledit cadre de support (14) adhère à ladite face interne (5) de la porte (4) et ledit dispositif d'affichage (8) est disposé à ladite ouverture d'accès (9), à travers laquelle l'opérateur peut utiliser ledit dispositif d'affichage (8) ;
- l'armoire comprend des moyens de blocage (9) pour bloquer ledit dispositif d'affichage (8) dans au moins ladite première configuration de travail ;
**caractérisée par le fait que** :
- ledit guide (15) comprend au moins une première section de mouvement (15a) desdits éléments coulissants (16, 17) se rapprochant/s'éloignant de ladite porte (4) et au moins une seconde section de mouvement (15b) disposée sensiblement orthogonalement à ladite première section de mouvement (15a) et sensiblement parallèlement à ladite porte (4) ;
- ladite ouverture d'accès (9) est complètement fermée par ledit dispositif d'affichage (8) dans ladite première configuration de travail ;
- ladite première section de mouvement (15a) est sensiblement orthogonale à ladite porte (4) ;
- ladite première position extrême et ladite seconde position extrême dudit axe de rotation (A) correspondent respectivement à la position extrême dudit guide (15) définie par ladite première section de mouvement (15a) et à la position extrême dudit guide (15) définie par ladite deuxième section de mouvement (15b) ;
- la distance entre ladite face interne (5) et ladite position extrême définie par ladite première section de mouvement (15a) est sensiblement plus petite que celle entre ladite face interne (5) et ladite position extrême définie par ladite deuxième section de mouvement (15b).

2. - Armoire (1) selon la revendication 1, dans laquelle lesdits moyens de blocage (29) bloquent ledit dispositif d'affichage (8) dans au moins ladite seconde configuration de travail.

3. - Armoire (1) selon une ou plusieurs des revendications précédentes, dans laquelle lesdits moyens de blocage (29) comprennent au moins un élément de blocage (20) associé à au moins l'un de ladite porte (4) et desdits moyens de support (26), ledit élément de blocage (20) étant déplaçable entre une configuration de repos, dans laquelle il est écarté dudit ensemble mobile (25), et au moins une configuration de fixation, dans laquelle il est engagé sur ledit ensemble mobile (25) par fixation de la position de celui-ci.

4. - Armoire (1) selon une ou plusieurs des revendications précédentes, dans laquelle lesdits moyens de blocage (29) comprennent une paire de trous (18) réalisés sur ledit ensemble mobile (25) et dans laquelle ledit élément de blocage (20) est disposé à l'intérieur de l'un desdits trous (18) dans ladite configuration de fixation et est disposé à l'extérieur desdits trous (18) dans ladite configuration de repos, ledit dispositif d'affichage (8) étant fixé dans l'une de ladite première configuration de travail et de ladite seconde configuration de travail lorsque ledit élément de blocage (20) est dans ladite configuration de fixation, et étant déplaçable entre ladite première configuration de travail et ladite seconde configuration de travail lorsque ledit élément de blocage (20) est dans ladite configuration de repos.

5. - Armoire (1) selon la revendication 4, dans laquelle lesdits moyens de blocage (29) comprennent au moins un évidement (22) réalisé sur lesdits moyens de support (26) et adaptés pour recevoir ledit élément de blocage (20), ledit évidement (22) étant en regard et en communication avec l'un desdits trous (18) lorsque ledit dispositif d'affichage (8) est dans ladite première configuration de travail et étant en regard et en communication avec l'autre desdits trous (18) lorsque ledit dispositif d'affichage (8) est dans ladite seconde configuration de travail, ledit évidement (22) recevant ledit élément de blocage (20) dans ladite configuration de fixation.

6. - Armoire (1) selon la revendication 5, dans laquelle lesdits moyens de blocage (29) comprennent :
- deux desdits éléments de blocage (20) disposés respectivement à proximité desdits corps fixes (12) ;
- deux paires desdits trous (18) réalisées sur ledit ensemble mobile (25) respectivement à proximité desdits éléments de blocage (20) ; et
- deux desdits évidements (22) réalisés sur lesdits moyens de support (26) respectivement à proximité desdits éléments de blocage (20).

7. - Armoire (1) selon une ou plusieurs des revendications précédentes, dans laquelle ladite porte (4) comprend au moins une partie façonnée (24) définissant au moins une cavité (30) pour contenir ledit dispositif d'affichage (8), ledit cavité (30) contenant lesdits moyens d'orientation (25, 26).

8. - Equipement électrique, comprenant :
- au moins une armoire (1) selon l'une quelconque des revendications 1 à 7 ;
- au moins un appareil électrique (7) reçu à l'intérieur dudit compartiment (3) et connecté de manière fonctionnelle audit dispositif d'affichage (8).

9. - Alimentation sans interruption (UPS), comprenant :
- au moins une armoire (1) selon l'une quelconque des revendications 1 à 7 ;
- au moins une unité d'alimentation électrique pour alimenter au moins un dispositif électronique, ladite unité d'alimentation électrique étant disposé à l'intérieur dudit compartiment (3) et comportant :
- au moins une unité de commande fonctionnellement connectée audit dispositif d'affichage (8);
- au moins un accumulateur de charges électriques ;
- au moins un dispositif électronique de puissance.
